(19) Europäisches Patentamt / European Patent Office / Office européen des brevets

(11) **EP 3 056 092 A1**

(12) **EUROPEAN PATENT APPLICATION**
published in accordance with Art. 153(4) EPC

(43) Date of publication:
**17.08.2016 Bulletin 2016/33**

(21) Application number: **14852968.8**

(22) Date of filing: **25.09.2014**

(51) Int Cl.:
*A23K 50/00* [(2016.01)]    *A23K 10/00* [(2016.01)]

(86) International application number:
**PCT/JP2014/075529**

(87) International publication number:
**WO 2015/053091 (16.04.2015 Gazette 2015/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.10.2013   JP 2013214196**

(71) Applicant: Unicharm Corporation
**Ehime 799-0111 (JP)**

(72) Inventor: **IKEZAKI Yuma**
**Itami-shi**
**Hyogo 664-0831 (JP)**

(74) Representative: **Peter, Julian**
**Staeger & Sperling**
**Partnerschaftsgesellschaft mbB**
**Sonnenstrasse 19**
**80331 München (DE)**

(54) **PET FOOD**

(57)    Provided is wet type pet food including: a chunk portion; and a base meat portion, in which the pet food contains proteins, carbohydrates, lipids, and insoluble dietary fibers, the chunk portion at least contains insoluble dietary fibers, and the proportion of the insoluble dietary fibers contained in the pet food is in a range of 5% by mass to 20% by mass with respect to the total mass of the pet food in terms of dry matter.

EP 3 056 092 A1

**Description**

Technical Field

The present invention relates to pet food. More specifically, the present invention relates to wet type pet food containing insoluble dietary fibers.

Priority is claimed on Japanese Patent Application No. 2013-214196, filed on October 11, 2013, the content of which is incorporated herein by reference.

Background Art

An animal with a habit of performing grooming on a daily basis swallows his or her body hair at the time of grooming, and thus a phenomenon in which the body hair is accumulated in the digestive tract to form a hairball occasionally occurs. For this reason, for the purpose of preventing formation of a hairball, a method of adding a fiber source to pet food is effectively used. In regard to fiber sources, an effect of promoting movement of a hairball in the digestive tract and promoting the excretion of the hairball (hairball-caring effect) is known. PTL 1 discloses a composition in which the excretion of body hair of a cat is controlled by means of including a fiber source.

Citation List

Patent Literature

[PTL 1] Published Japanese Translation No. 2003-519639 of the PCT International Publication

Summary of Invention

Technical Problem

As a fiber source having a hairball-caring effect, insoluble dietary fibers are exemplified. In a case where fermented fibers are used as a fiber source, since the fermented fibers only have a small amount of insoluble dietary fibers having a hairball-caring effect, the hairball-caring effect is not excellent. Further, as dry food which is a dry solid, dry food to which insoluble dietary fibers are added is known. However, among users of pet food, there are many users that use a combination of dry food and wet type pet food because of excellent preference. In such a case, when a combination of dry food type hairball-caring food and typical wet type pet food is fed to a pet, the amount of insoluble dietary fibers which can be ingested is relatively lowered, and thus the hairball-caring effect becomes weakened. Moreover, similar to the case of dry food to which insoluble dietary fibers are added, in a case where insoluble dietary fibers are added to wet type pet food, the pet food has the hairball-caring effect, but there is a problem that the preference for pet food is reduced when the amount of insoluble dietary fibers in wet type pet food is increased. Therefore, there is demand for the introduction of wet type pet food which has the hairball-caring effect and is not accompanied by a significant reduction in the preference for the pet food.

The present invention has been made in consideration of the above-described problems, and an object of the present invention is to provide wet type pet food which contains insoluble dietary fibers and is not accompanied by a significant reduction in the preference for the pet food. Solution to Problem

(1) Wet type pet food including: a chunk portion; and a base meat portion, in which the pet food contains proteins, carbohydrates, lipids, and insoluble dietary fibers, the chunk portion at least contains insoluble dietary fibers, and the proportion of the insoluble dietary fibers contained in the pet food is in a range of 5% by mass to 20% by mass with respect to the total mass of the pet food in terms of dry matter.

(2) The pet food according to (1), in which the proportion of the insoluble dietary fibers contained in the pet food is in a range of 8% by mass to 20% by mass with respect to the total mass of the pet food in terms of dry matter.

(3) The pet food according to (1) or (2), in which the base meat portion contains the insoluble dietary fibers, and the proportion of the insoluble dietary fibers contained in the base meat portion is 12% by mass or less with respect to the total mass of the pet food in terms of dry matter.

(4) The pet food according to any one of (1) to (3), in which the proportion of water contained in the pet food is 60% by mass or greater with respect to the total mass of the pet food.

(5) The pet food according to any one of (1) to (4), in which the proportion of proteins contained in the pet food is in a range of 26% by mass to 60% by mass with respect to the total mass of the pet food in terms of dry matter, and

the proportion of lipids contained in the pet food is in a range of 9% by mass to 30% by mass with respect to the total mass of the pet food in terms of dry matter.

(6) The pet food according to any one of (1) to (5), in which the proportion of the chunk portion contained in the pet food is in a range of 5% by mass to 30% by mass with respect to the total mass of the pet food.

(7) The pet food according to any one of (1) to (6), in which the insoluble dietary fiber is cellulose.

(8) The pet food according to any one of (1) to (7), in which the pet food is feed for cats.

(9) A method of producing the pet food according to any one of (1) to (8), including: mixing raw ingredients of a chunk portion with insoluble dietary fibers to obtain a chunk portion raw ingredient mixture.

Advantageous Effects of Invention

According to the pet food of the present invention, it is possible to provide wet type pet food which has a greater hairball-caring effect that that of a conventional product and is not accompanied by a significant reduction in the preference for the pet food, and this wet type pet food contributes to maintaining the health of a pet.

Description of Embodiments

«Pet food»

<First embodiment>

Wet type pet food according to a first embodiment of the present invention includes a chunk portion and a base meat portion, in which the pet food contains proteins, carbohydrates, lipids, and insoluble dietary fibers, the chunk portion at least contains insoluble dietary fibers, and the proportion of the insoluble dietary fibers contained in the pet food is in a range of 5% by mass to 20% by mass with respect to the total mass of the pet food in terms of dry matter.

Here, the term "chunk" indicates a part formed by solidifying raw ingredients in a small piece shape and the chunk portion indicates a set of chunks. The "base meat" portion indicates a wet part other than the chunk portion in the pet food.

The proportion of the chunk portion contained in the pet food is not particularly limited, but is preferably in a range of 5% by mass to 30% by mass and more preferably in a range of 10% by mass to 25% by mass with respect to the total mass of the pet food.

The shape of the chunk is not particularly limited, and examples thereof include shapes formed to have a pellet (grain) shape such as a spherical shape, a polygonal shape, a cylindrical shape, a donut shape, a plate shape, and a go stone shape (circular tablet; oval). The size of such a pellet is not particularly limited, but it is preferable that the short diameter and the long diameter of the pellet in a case where the pellet placed on a horizontal stand is seen from the above is in a range of 1 mm to 25 mm and the thickness thereof from the lower surface (lower end) to the upper surface (upper end) on the horizontal stand is in a range of 1 mm to 20 mm, more preferable that the short diameter and the long diameter thereof is in a range of 3 mm to 11 mm and the thickness thereof is in a range of 3 mm to 9 mm, and still more preferable that the short diameter and the long diameter thereof is in a range of 5 mm to 9 mm and the thickness thereof is in a range of 5 mm to 8 mm. This size is suitable for cats or small dogs (dogs having a weight of approximately 1 kg to 14 kg) to easily eat pet food and thus the preference of the cats and the small dogs for the pet food of the present invention can be further improved.

The shape of the base meat portion is not particularly limited, and examples thereof include a liquid shape, a gel shape, a solid shape, and a combination of these. Further, in a case where the base meat portion contains a solid, the shape thereof is not particularly limited, but a shape which is the same as that of the chunk portion is preferable.

The "wet type pet food" indicates pet food containing a large amount of moisture compared to dry food subjected to a drying treatment, as a final form provided for the market. The content ratio of the moisture in the pet food is typically 50% by mass or greater, preferably 60% by mass or greater, more preferably 65% by mass or greater, and particularly preferably 70% by mass or greater with respect to the total mass of the pet food.

In the present specification, the moisture content (% by weight) of the produced pet food is measured by a normal pressure heating and drying method described below.

The mass (W1 gram) of an aluminum weighing can is measured as a constant weight value in advance. A sample is put in the aluminum weighing can and the mass thereof (W2 grams) is weighed. Next, the sample is dried under a temperature condition of 135°C for 2 hours using a forced circulation type hot air drier. The sample is allowed to stand to be cooled in a dry atmosphere (silica gel desiccator) and the mass (W3 grams) is weighed. The moisture content is acquired using the following equation from the obtained respective mass values.

acquired using the following equation from the obtained respective mass values.

$$\text{Moisture content (\%)} = (W2 - W3) \div (W2 - W1) \times 100$$

The proportion of proteins, carbohydrates, and lipids contained in the pet food is not particularly limited, but the proteins, carbohydrates, and lipids can be blended in the pet food at a proportion which is the same as that of typical wet type pet food. For example, the proportion of the proteins contained in the pet food can be set to be in a range of 26% by mass to 60% by mass and more preferably in a range of 35% by mass to 55% by mass with respect to the total mass of the pet food in terms of dry matter. The proportion of the carbohydrates contained in the pet food can be set to be in a range of 5% by mass to 30% by mass and more preferably in a range of 10% by mass to 20% by mass with respect to the total mass of the pet food in terms of dry matter. The proportion of the lipids contained in the pet food can be set to be in a range of 9% by mass to 30% by mass and more preferably in a range of 20% by mass to 30% by mass with respect to the total mass of the pet food in terms of dry matter.

The chunk portion of the pet food of the present invention contains insoluble dietary fibers. When the chunk portion contains insoluble dietary fibers, the pet food has the hairball-caring effect and the degree of preference for the pet food can be maintained. For example, when pet foods containing the same amount of insoluble dietary fibers are compared to each other with respect to the entirety pet food, in the case of pet food containing insoluble dietary fibers in the chunk portion, dispersion of the insoluble dietary fibers in the entire pet food is decreased and thus the preference of a pet for the pet food is high compared to the pet food that does not contain insoluble dietary fibers in the chunk portion. The reason for this is considered that the surface area to feel the taste becomes small and thus the preference for pet food can be easily maintained when not the base meat portion having a large surface area but the chunk portion having high shape retainability is allowed to contain cellulose.

The proportion of the insoluble dietary fibers contained in the entire pet food of the present invention is in a range of 5% by mass to 20% by mass, preferably in a range of 8% by mass to 20% by mass, more preferably in a range of 10% by mass to 15% by mass, and still more preferably in a range of 12% by mass to 15% by mass with respect to the total mass of the pet food in terms of dry matter. When the content of the insoluble dietary fibers contained in the entire pet food is set to be 5% by mass or greater in terms of dry matter, pet food which has an excellent hairball-caring effect can be obtained. Further, when the content of the insoluble dietary fibers contained in the entire pet food is set to be 20% by mass or less in terms of dry matter, pet food which has an excellent hairball-caring effect and is not accompanied by a significant reduction in the preference for pet food can be obtained.

The proportion of the insoluble dietary fibers contained in the base meat portion is preferably 12% by mass or less and more preferably 8% by mass or less with respect to the total mass of the pet food in terms of dry matter. From the viewpoint that a significant reduction in the preference is not accompanied and an excellent hairball-caring effect can be obtained, it is preferable that the proportion of the insoluble dietary fibers contained in the base meat portion is 12% by mass or less.

The type of the "insoluble dietary fiber" is not particularly limited as long as the dietary fiber is insoluble in water, and examples thereof include cellulose, hemicellulose, and lignin. The fiber length of the insoluble dietary fiber is not particularly limited, but is preferably in a range of 50 μm to 2000 μm, more preferably 100 μm to 1500 μm, and particularly preferably in a range of 150 μm to 1000 μm.

The amount of the insoluble dietary fibers contained in the pet food can be acquired according to a known modified Prosky method or the like.

<Raw ingredients>

The raw ingredients constituting the pet food are not particularly limited as long as raw ingredients which can be prepared such that the pet food of the present invention contains proteins, carbohydrates, lipids, and insoluble dietary fibers are used, and raw ingredients used for pet food of the related art can be applied. Preferably, raw ingredients typically used as complete nutritional food of the pet food can be used. For example, the chunk portion and the base meat portion can be produced using the raw ingredients described below.

A method of adding insoluble dietary fibers to the pet food and raw ingredients containing the insoluble dietary fibers are not particularly limited, and a method of adding powder containing insoluble dietary fibers to the pet food is exemplified as the method. The powder may not contain both of water-soluble dietary fibers and insoluble dietary fibers at any blending ratio. However, from the viewpoint that dietary fibers having a hairball-caring effect are mainly insoluble dietary fibers, it is preferable that the powder contains a large amount of insoluble dietary fibers.

(Raw ingredients of base meat portion)

The raw ingredients contained in the base meat portion of the pet food are not particularly limited, but raw ingredients of proteins can be mainly used as the raw ingredients for the base meat portion.

Examples of the raw ingredients of proteins contained in the base meat portion include vegetable-derived protein, animal-derived protein, and a mixture of these. Specific examples of the vegetable-derived protein include gluten, wheat protein, soybean protein, rice protein, and corn protein. Examples of the animal-derived protein include protein of muscles and organs of cattle, pigs, chickens, and seafood; protein of milk; and a mixture of these.

As raw ingredients other than the above-described raw ingredients contained in the base meat portion, oils and fats, a chicken extract, a fish extract, seasonings, a thickener, water, or the like can be added to the base portion.

(Raw ingredients of chunk portion)

Raw ingredients of proteins can be used for the chunk portion of the pet food. As the raw ingredients of proteins contained in the chunk portion, the same raw ingredients of proteins used for the base meat portion described above can be used.

Moreover, cereals may be added to the chunk portion of the pet food. Preferred examples of the cereals include corn, wheat, barley, oats, rice, and soybeans. Since these cereals may contain proteins, ash content, minerals, and vitamins in addition to carbohydrates, these can be used as nutrient sources. Further, the blending ratio of an amino acid to the entire pet food can be easily adjusted (mainly decreased) when the cereals are added to the chunk portion.

As raw ingredients other than the raw ingredients contained in the chunk portion, seasonings, a binder, water, or the like can be added to the chunk portion.

A method of feeding the pet food of the present invention and the purpose thereof are not particularly limited. However, since the pet food of the present invention contains proteins, carbohydrates, and lipids in a well-balanced manner, it is possible to provide the pet food of the present invention for a pet as comprehensive nutritional diet by blending the raw ingredients in conformity with the reference values of the comprehensive nutritional diet to prepare pet food. As the reference of comprehensive nutritional diet, for example, the reference determined by Association of American Feed Control Officials (AAFCO) may be used.

The pet food of the present invention may be stored in a vacuum of a closed container. At this time, the pet food may be stored in a pouch container, to which pouch processing (laminate processing) is applied, used for known retort food of the related art or the like. In regard to the amount of the pet food to be stored in the container, approximately one serving may be stored in each container by dividing the pet food to small portions or multiple servings (for example, three servings) may be collectively stored in a container having a large capacity. Further, from a viewpoint of capability of long-term storage, after a process of filling the pouch container with pet food is carried out, a sterilization treatment using a known heat treatment or pressurizing treatment in the related art may be performed.

The pet food of the present invention may be put into a metal can or a plastic cap container for storage, but it is preferable that the pet food is put into the pouch container to be stored in a vacuum. Since the pouch container is a flexible container, the pet food of the first embodiment can be easily taken out to the outside of the container. At this time, by taking the pet food out of the container by handling (squeezing) the pouch container, it is possible to avoid for the solid ingredients constituting the pet food of the first embodiment to remain in the container. Since the solid ingredients are relatively minute, it takes time and labor for taking the solid ingredients out of the container when they remain in a can or a cup container. This problem can be solved using a pouch container. In general, even when pet food in a state of being inside of a can or a cup container is provided for a pet, it is difficult for the pet food to be eaten because the opening of the container is narrow and thus the pet food is left uneaten in many cases. Accordingly, it is important for the pet food to be easily taken out of the container. In addition, it is also important for the container after the pet food is taken out to be easily discarded and the pouch container is easy to be discarded because the pouch container is not bulky.

In the present specification and claims, the term "pets" indicate animals that have been bred by people. In a narrower sense, pets are animals being cared for by their owners. Further, the term "pet food" indicates feed for pets. The pet food of the present invention can be produced or sold as "animal feed" or "animal food."

The pet food of the present invention can be fed to any pets including dogs and cats. However, from the viewpoints of improving the hairball-caring effect for cats and having an effect which is not accompanied by a reduction in the preference of cats for the pet food, it is preferable that the pet food is provided for cats.

In order to inform the pet owner that the pet food of the first embodiment is suitable for a dog or a cat, when the pet food of the first embodiment is packaged and sold, it is possible to sell the product in a state in which a fact that the pet food is suitable for a dog or a cat is displayed on the package.

«Method of producing pet food»

A method of producing the pet food includes a process of mixing raw ingredients of a chunk portion with insoluble dietary fibers to obtain a chunk portion raw ingredient mixture. An example of the method of producing the pet food of the present invention will be described in detail.

<Base meat portion>

In a case where the raw ingredients of proteins are included in the raw ingredients of the base meat portion and these are tissues derived from an animal or a vegetable and unheated, the raw ingredients of proteins can be heated. In a case where the tissues derived from an animal or a vegetable have portions which cannot be eaten by a pet or which a pet does not prefer to eat, it is preferable that those portions are removed therefrom. Specific examples of the portions to be removed include animal skins, animal bones, and seed husks of vegetables. Thereafter, the raw ingredients of proteins can be processed to have a size suitable for a pet to easily eat the pet food.

<Chunk portion>

A dough of a chunk portion raw ingredient mixture is prepared by grinding frozen meat and/or ingredients of fish meat and mixing a powder mixture containing cereals, insoluble dietary fibers, animal dry proteins, vitamins, minerals, a colorant, and a preservative with the ground meat and/or ingredients of fish meat. The obtained dough is extruded onto a belt of a steam oven and is heated and cooked in a temperature range of 80°C to 90°C. The chunk portion raw ingredient mixture can be solidified by being heated. The heating time is not particularly limited, but the quality thereof can be managed to be uniform by measuring the temperature of the mixture for a chunk immediately after the heating. Next, after the temperature of the mixture for a chunk is lowered to approximately room temperature, the chunk portion of the pet food of the first embodiment can be obtained by cutting the mixture for a chunk into small pieces with an appropriate size.

<Entire pet food>

The pet food of the first embodiment can be obtained by mixing the raw ingredients of the base meat portion with each other and adding the chunk portion thereto.

[Examples]

The present invention will be further described in detail with reference to the following examples, but the present invention is not limited thereto.

[Production of pet food]

(Comparative Example 1)

First, a process of producing a base meat portion is described. As raw ingredients of proteins contained in the base meat portion, fish ingredients were heated by steam. After the temperature of the heated fish ingredients was lowered to room temperature, skins, bones, and other foreign matters were removed therefrom, and the size thereof was adjusted to have a flake shape, thereby obtaining fish flakes. Subsequently, raw ingredients (raw ingredients A) of the base portion containing raw ingredients of proteins (fish flakes), oils and fats, a fish extract, seasonings, a thickener, water, and the like were mixed with each other at mass ratios listed in Table 1, thereby obtaining the base meat portion of the pet food according to the present invention.

Next, a process of producing a chunk portion is described. Raw ingredients (raw ingredients B) of the chunk portion containing raw ingredients of proteins, cereals, vitamins, minerals, seasonings, a binder, water, and the like were uniformly mixed with each other using a stirrer at mass ratios listed in Table 1, formed by being extruded using an extruder, heated by steam, and cut to have a cube shape having a size of 3 mm to 5 mm after the temperature thereof was lowered to approximately room temperature, thereby obtaining the chunk portion of the pet food according to the present invention.

The pet food according to the present invention was obtained by adding the base meat portion to the chunk portion.

Accordingly, pet food of Comparative Example 1 was produced without adding cellulose powder to the chunk portion nor to the base meat portion. Therefore, the raw ingredients of the pet food of Comparative Example 1 do not contain insoluble dietary fibers.

(Comparative Example 2)

Pet food of Comparative Example 2 was obtained by adding cellulose powder to only the base meat portion at a mass ratio listed in Table 1. Raw materials other than the cellulose powder were the same as those of the pet food of Comparative Example 1 described above and pet food was produced using the same production method as in Comparative Example 1. The total mass was adjusted using water, and both of the chunk portion and the base meat portion were produced so as to have the same mass ratios as those of Comparative Example 1.

(Comparative Example 3)

Pet food of Comparative Example 3 was obtained by adding cellulose powder to only the chunk portion at a mass ratio listed in Table 1. Raw materials other than the cellulose powder were the same as those of the pet food of Comparative Example 1 described above and pet food was produced using the same production method as in Comparative Example 1. The total mass was adjusted using water, and both of the chunk portion and the base meat portion were produced so as to have the same mass ratios as those of Comparative Example 1.

(Examples 1 and 2)

Pet foods of Examples 1 and 2 were obtained by adding cellulose powder to both of the chunk portion and the base meat portion at mass ratios listed in Table 1. Raw materials other than the cellulose powder were the same as those of the pet food of Comparative Example 1 described above and pet foods were produced using the same production method as in Comparative Example 1. The total mass was adjusted using water, and both of the chunk portion and the base meat portion were produced so as to have the same mass ratios as those of Comparative Example 1.

(Example 3)

Pet food of Example 3 was obtained by adding cellulose powder to only the chunk portion at a mass ratio listed in Table 1. Raw materials other than the cellulose powder were the same as those of the pet food of Comparative Example 1 described above and pet food was produced using the same production method as in Comparative Example 1. The total mass was adjusted using water, and both of the chunk portion and the base meat portion were produced so as to have the same mass ratios as those of Comparative Example 1.

[Table 1]

| | | | Comparative Example 1 | Comparative Example 2 | Comparative Example 3 | Example 1 | Example 2 | Example 3 |
|---|---|---|---|---|---|---|---|---|
| Raw ingredients of base meat portion | Raw ingredients of base meat portion (raw ingredients A) | Raw ingredients of proteins (fish muscle and the like) | 20.0g | 20.0g | 20.0g | 20.0g | 20.0g | 20.0g |
| | | Raw ingredients other than those described above (oils and fats, fish extract, and the like) | 2.0g | 2.0g | 2.0g | 2.0g | 2.0g | 2.0g |
| | | Additives other than those described above (seasonings, thickener, and the like) | 2.0g | 2.0g | 2.0g | 2.0g | 2.0g | 2.0g |
| | | Water | 36.0g | 33.7g | 36.0g | 34.5g | 34.9g | 36.0g |
| | Dietary fibers added to base meat portion | VITACEL LC200 (manufactured by J.RETTENMAIER & SOEHNE GmbH Co KG) | 0g | 2.3g | 0g | 1.5g | 1.1g | 0g |
| Raw ingredients of chunk portion | Raw ingredients of chunk portion (raw ingredients B) | Raw ingredients of proteins {animal proteins (such as fish muscle) and vegetable proteins (such as proteins derived from cereals)} | 8.0g | 8.0g | 8.0g | 8.0g | 8.0g | 8.0g |
| | | Cereals (wheat and the like) | 2.0g | 2.0g | 2.0g | 2.0g | 2.0g | 2.0g |
| | | Vitamins and minerals | 0.9g | 0.9g | 0.9g | 0.9g | 0.9g | 0.9g |
| | | Additives other than those described above (seasonings, binder, and the like) | 0.1g | 0.1g | 0.1g | 0.1g | 0.1g | 0.1g |
| | | Water | 4.0g | 4.0g | 0.7g | 3.25g | 2.9g | 1.3g |
| | Dietary fibers added to chunk portion | VITACEL LC200 (manufactured by J.RETTENMAIER & SOEHNE GmbH Co KG) | 0g | 0g | 3.3g | 0.75g | 1.1g | 2.7g |

The cellulose powder used in Examples 1 to 3 and Comparative Examples 2 and 3 is VITACEL LC200 (manufactured by J.RETTENMAIER & SOEHNE GmbH Co KG). The proportion of dietary fibers contained in VITACEL LC200 powder is 98%, the proportion of insoluble dietary fibers is 99% or greater with respect to the total amount of dietary fibers, and the average fiber length of the dietary fibers is 300 μm.

Table 2 shows raw ingredients of the base meat portion (raw ingredients A) with respect to the total mass of the pet food, raw ingredients of the chunk portion (raw ingredients B) with respect to the total mass of the pet food, the blending ratios of the cellulose powder added to the pet food, and the blending ratios of cellulose powder with respect to the total mass of the pet food in terms of dry matter in Examples 1 to 3 and Comparative Examples 1 to 3.

[Table 2]

| | Comparative Example 1 | Comparative Example 2 | Example 1 | Example 2 | Example 3 | Comparative Example 3 |
|---|---|---|---|---|---|---|
| Raw ingredients of base meat portion | 80% | 77% | 78% | 79% | 80% | 80% |
| Cellulose powder of base meat portion | 0% | 3% | 2% | 1.5% | 0% | 0% |
| (In terms of dry matter) | | (14%) | (9.3%) | (7%) | | |
| Raw ingredients of chunk portion | 20% | 20% | 19% | 18.5% | 16.4% | 15.6% |
| Cellulose powder of chunk portion | 0% | 0% | 1% | 1.5% | 3.6% | 4.4% |
| (In terms of dry matter) | | | (4.7%) | (7%) | (18%) | (22%) |
| Evaluation of hairball-caring effect | C | A | A | A | A | A |
| Evaluation of preference | Reference | C | B | A | B | C |
| Details of evaluation of preference (Target to be evaluated: | Reference | 43:57 | 34:66 | 51:49 | 45:55 | 36:64 |
| Comparative Example 1 (reference)) | | | | | | |

In the proportions (in terms of dry matter) of the nutrients contained in each pet food produced in Examples 1 to 3 and Comparative Examples 1 to 3 with respect to the entire pet food, the proportion of proteins was 48.6% by mass, the proportion of carbohydrates was 12.3% by mass, and the proportion of lipids was 24.3% by mass. The water content was 75.7% by mass with respect to the entire pet food.

[Evaluation of hairball-caring effect]

The hairball-caring effect of dry pet food for cats was evaluated. For evaluation, dry food to which 3% by mass of cellulose powder with respect to the total mass of the pet food was added was used as pet food for a test in place of the pet foods of Examples 1 to 3 and Comparative Examples 2 and 3. Further, dry food to which cellulose powder was not added was used as pet food for comparison in place of the pet food of Comparative Example 1. The results obtained by feeding the pet food (dry food) for a test and pet food (dry food) for comparison to a total of 40 cats that were bred by a total of 40 panels were collected.

Specifically, 20 panels were asked to feed the pet food for a test to their pets for 4 weeks and then to feed the pet food for comparison to their pets for 4 weeks in place of the pet food usually fed to their pets. The remaining 20 panels were asked to feed the pet food for comparison to their pets for 4 weeks and then to feed the pet food for a test to their pets for 4 weeks in place of the pet food usually fed to their pets.

In regard to the hairball-caring effect for cats after 4 weeks from the start of the test, each of the panels was questioned about the items for evaluation described below and the answers were obtained.

With respect to a question about the hairball-caring effect of the pet food for a test, to which 5% of cellulose powder was added, corresponding to Examples 1 to 3 and Comparative Examples 2 and 3, 51.2% of the panels answered "effective," 17.1% of the panels answered "somewhat effective," and 31.7% of the panels answered that they "cannot say." In addition, no panels answered "not very effective," or "ineffective."

With respect to a question about the hairball-caring effect of the pet food for comparison, to which cellulose powder was not added, 35.0% of the panels answered "effective," 42.5% of the panels answered "somewhat effective," 17.5% of the panels answered that they "cannot say," and 5.0% of the panels answered "not very effective." In addition, no panels answered "ineffective."

The evaluation results of the hairball-caring effect are also listed in Table 2. A case where 50% or more panels answered "effective" was evaluated that the hairball-caring effect of the corresponding test example was great (A). A case where 40% to less than 50% of the panels answered "effective" was evaluated that the hairball-caring effect of the corresponding test example was in the same level (B) as that of pet food of the related art. A case where 40% or less of the panels answered "effective" was evaluated that the hairball-caring effect of the corresponding test example was inferior (C) to those of pet foods of the comparative examples.

It is assumed that the hairball-caring effect of the pet foods (dry foods) corresponding to Examples 1 to 3 and Comparative Examples 2 and 3 is the same as the hairball-caring effect of the pet foods of Examples 1 to 3 and Comparative Examples 2 and 3. Therefore, as shown from the results, it is evident that the pet foods of Examples 1 to 3 and Comparative Examples 2 and 3 are more excellent in the hairball-caring effect compared to the pet food of Comparative Example 1.

[Evaluation of preference]

The preference of cats for each of the produced pet foods was evaluated according to the following method. In the notation of "numerical value A:numerical value B" described below, the numerical value A indicates the level (degree) of preference for pet food for a test and the numerical value B indicates the level (degree) of preference for pet food for comparison. The sum of the numerical value A and the numerical value B is 100. A case where the numerical value A is 51 or greater is evaluated that the preference for the pet food for a test is in the same degree (A) as the pet food for comparison. A case where the numerical value A is in a range of 40 to less than 51 is evaluated that the preference for the pet food for a test is substantially in the same degree (B) as the pet food for comparison. A case where the numerical value A is less than 40 is evaluated that the preference for the pet food for a test is inferior (C) to the pet food for comparison.

The method of evaluating the preference is as follows.

First, in a unit of combination of (pet food for a test) Examples 1 to 3 and Comparative Examples 2 and 3 and (pet food for comparison) Comparative Example 1, a total of five sets of pet food were prepared. Each set was tested for 2 days by monitoring 20 cats.

On the first day, 40 g of each pet food was selected from the left on one side and from the right on the other side from among respective sets of pet food for feeding one cat at the same time and then the amount of pet food eaten by a cat was measured after one hour.

The amount of ingested pet food of Examples 1 to 3 and Comparative Examples 2 and 3 and the amount of ingested pet food of Comparative Example 1 were acquired in terms of the percentage based on the total mass of the pet food eaten by one cat for the first day. The percentages obtained from 20 cats being monitored were averaged and set as the result of the first day.

On the second day, 40 g of each pet food was selected from the right on one side and from the left on the other side from among the respective sets of pet food for feeding one cat at the same time and then the amount of pet food eaten by a cat was measured after one hour.

The amount of ingested pet food of Examples 1 to 3 and Comparative Examples 2 and 3 and the amount of ingested pet food of Comparative Example 1 were acquired in terms of the percentage based on the total mass of the pet food eaten by one cat for the second day. The percentages obtained from 20 cats being monitored were averaged and set as the result of the second day.

Finally, the results of the first and second days were averaged, and the ratios (preference) of the amounts of ingested pet food as the final results were acquired. It is indicated that a cat being monitored ate the pet food with a good appetite as the numeric value of the preference is higher.

The evaluation results of the preference are described below. The degree of the preference of Comparative Example 2 to the preference of Comparative Example 1 was "Comparative Example 2:Comparative Example 1 = 43:57." Further, the degree of the preference of Example 1 to the preference of Comparative Example 1 was "Example 1:Comparative Example 1 = 34:66." The degree of the preference of Example 2 to the preference of Comparative Example 1 was "Example 2:Comparative Example 1 = 51:49." The degree of the preference of Example 3 to the preference of Comparative Example 1 was "Example 3:Comparative Example 1 = 45:55." The degree of the preference of Comparative Example 3 to the preference of Comparative Example 1 was "Comparative Example 3:Comparative Example 1 = 36:64."

The pet food of Comparative Example 2 obtained by adding cellulose powder only to the base meat portion has preference inferior to the pet food of Comparative Example 1. The pet food of Example 1 obtained by adding cellulose powder to the base meat portion at a mass ratio of 2% and to the chunk portion at a mass ratio of 1% has substantially the same degree of preference as that of the pet food of Comparative Example 1. The pet food of Example 2 obtained by adding cellulose powder to the base meat portion at a mass ratio of 1.5% and to the chunk portion at a mass ratio of 1.5% has the same degree of preference as that of the pet food of Comparative Example 1. The pet food of Example 3 obtained by adding cellulose powder to the base meat portion at a mass ratio of 0% and to the chunk portion at a mass ratio of 3.6% has substantially the same degree of preference as that of the pet food of Comparative Example 1. The pet food of Comparative Example 3 obtained by adding cellulose powder to the base meat portion at a mass ratio of 0% and to the chunk portion at a mass ratio of 4.4% has preference inferior to the pet food of Comparative Example 1.

It is understood that the pet food of Comparative Example 2 obtained by adding insoluble dietary fibers only to the base meat portion has a hairball-caring effect, but the preference for the pet food is inferior to the pet food of Comparative Example 1 which does not contain insoluble dietary fibers. Meanwhile, the pet foods of Examples 1 and 2 obtained by adding cellulose powder to the chunk portion has higher preference than the pet food of Comparative Example 2 even though the pet food is obtained by adding the same amount of insoluble dietary fibers as those of the pet food of Comparative Example 2. In addition, the pet food of Example 3 obtained by adding insoluble dietary fibers only to the chunk portion has higher preference than the pet food of Comparative Example 2 even though the pet food is obtained by adding a larger amount of insoluble dietary fibers compared to the pet food of Comparative Example 2.

Therefore, as shown from the results described above, it is understood that pet food may have an excellent hairball-caring effect and a reduction in the preference can be suppressed by means of adding cellulose powder to the chunk portion.

The respective configurations and the combinations of those configurations in the respective embodiments described above are merely examples and additions, omission, substitutions, and other modifications of the configurations are possible within the range not departing from the scope of the present invention. Further, the present invention is not limited to the respective embodiments, but by the scope of claims.

Industrial Applicability

The pet food according to the present invention can be widely applied to the field of feed for pets.

**Claims**

1. Wet type pet food comprising:

   a chunk portion; and
   a base meat portion,

   wherein the pet food contains proteins, carbohydrates, lipids, and insoluble dietary fibers,
   the chunk portion at least contains insoluble dietary fibers, and
   the proportion of the insoluble dietary fibers contained in the pet food is in a range of 5% by mass to 20% by mass with respect to the total mass of the pet food in terms of dry matter.

2. The pet food according to claim 1, wherein the proportion of the insoluble dietary fibers contained in the pet food is in a range of 8% by mass to 20% by mass with respect to the total mass of the pet food in terms of dry matter.

3. The pet food according to claim 1 or 2,
   wherein the base meat portion contains the insoluble dietary fibers, and
   the proportion of the insoluble dietary fibers contained in the base meat portion is 12% by mass or less with respect to the total mass of the pet food in terms of dry matter.

4. The pet food according to any one of claims 1 to 3, wherein the proportion of water contained in the pet food is 60% by mass or greater with respect to the total mass of the pet food.

5. The pet food according to any one of claims 1 to 4,
   wherein the proportion of proteins contained in the pet food is in a range of 26% by mass to 60% by mass with respect to the total mass of the pet food in terms of dry matter, and
   the proportion of lipids contained in the pet food is in a range of 9% by mass to 30% by mass with respect to the total mass of the pet food in terms of dry matter.

6. The pet food according to any one of claims 1 to 5, wherein the proportion of the chunk portion contained in the pet food is in a range of 5% by mass to 30% by mass with respect to the total mass of the pet food.

7. The pet food according to any one of claims 1 to 6, wherein the insoluble dietary fiber is cellulose.

8. The pet food according to any one of claims 1 to 7, wherein the pet food is feed for cats.

9. A method of producing the pet food according to any one of claims 1 to 8, comprising:

   mixing raw ingredients of a chunk portion with insoluble dietary fibers to obtain a chunk portion raw ingredient mixture.

INTERNATIONAL SEARCH REPORT

**EP 3 056 092 A1**

| International application No. |
|---|
| PCT/JP2014/075529 |

**A. CLASSIFICATION OF SUBJECT MATTER**
*A23K1/18(2006.01)i, A23K1/00(2006.01)i*

According to International Patent Classification (IPC) or to both national classification and IPC

**B. FIELDS SEARCHED**

Minimum documentation searched (classification system followed by classification symbols)
A23K1/00-3/04

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-528031 A (The Iams Co.), 06 August 2009 (06.08.2009), paragraphs [0010], [0028], [0046], [0052], [0054], [0076], [0078] & US 2007/0202154 A1 & EP 1988785 A & WO 2007/096839 A1 & CA 2643746 A & AR 68696 A & AU 2007219128 A | 1–9 |
| Y | Science Diet Adult Hairball Control Savory Chicken Entre'e, [online], 2012.06.14 (archive date), (retrieval date 2014.12.15), Internet <URL:https://web.archive.org/web/20120614004957 /http://www.hillspet.com/products/sd-feline- adult-hairball-control-savory-chicken-entree- minced-canned.html> | 1–9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 December 2014 (15.12.14) | 06 January 2015 (06.01.15) |

| Name and mailing address of the ISA/ Japan Patent Office | Authorized officer |
|---|---|
| Facsimile No. | Telephone No. |

Form PCT/ISA/210 (second sheet) (July 2009)

13

## INTERNATIONAL SEARCH REPORT

International application No.

PCT/JP2014/075529

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-14327 A (Nisshin Pet Food Inc.), 18 January 2000 (18.01.2000), paragraphs [0008], [0023], [0025], [0032] (Family: none) | 1-9 |
| A | JP 2007-169289 A (The Iams Co.), 05 July 2007 (05.07.2007), entire text & JP 2003-519639 A & US 2002/0012709 A1 & US 2003/0091668 A1 & US 2004/0120987 A1 & US 2006/0062828 A1 & WO 2001/050881 A2 & AU 2762801 A & BR 107453 A & HU 204309 A & CA 2396093 A & EG 22683 A & IL 150598 D & NZ 520435 A & PL 356799 A & AU 784325 B & CN 1575133 A & RU 2002120921 A & AR 27508 A & ZA 200206267 A & MX PA02006669 A | 1-9 |
| A | JP 2005-224129 A (Yugen Kaisha Ishida), 25 August 2005 (25.08.2005), entire text (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013214196 A

- JP 2003519639 W